# EUROPEAN PATENT APPLICATION

(11) **EP 4 851 953 A1**
(43) Date of publication of application: **09.12.2026**
(21) Application number: 26164014.8
(22) Date of filing: 11.03.2026
(51) Int. Cl.: G06V 10/82, G06V 20/52

(54) **METHOD AND APPARATUS FOR INSPECTING PRODUCT QUALITY**

(30) Priority: 05.06.2025 CN 202510748787
(71) Applicant: Otis Elevator Company, Farmington, Connecticut 06032 (US)
(72) Inventor: Zhu, Jinfan, Shanghai, 200335 (CN); Lu, Changping, Shanghai, 200335 (CN); Xue, Fei, Shanghai, 200335 (CN); Wang, Yueyun, Shanghai, 200335 (CN)
(74) Representative: Schmitt-Nilson Schraud Waibel Wohlfrom Patentanwälte Partnerschaft mbB

(57) **Abstract**

The present disclosure relates to quality inspection technology, image processing technology, and natural language processing technology, particularly to a method and an apparatus for inspecting product quality, a product quality inspection system comprising the apparatus, a non-transitory computer-readable storage medium storing computer programs/instructions for implementing the method, and a computer program product comprising computer programs/instructions for implementing the method. An apparatus for inspecting product quality according to one aspect of the present disclosure comprises one or more processors, one or more memories, and computer programs/instructions stored on the memories. When the above-mentioned computer programs/instructions run on the processor, it will result in the following operations: acquiring images depicting an operating process of a product under inspection; generating non-structured descriptive information about the images; transforming the non-structured descriptive information into structured descriptive information; and, generating test results for the product under inspection based on the structured descriptive information.

## Description

The present disclosure relates to quality inspection technology, image processing technology, and natural language processing technology, particularly to a method and an apparatus for inspecting product quality, a product quality inspection system comprising the apparatus, a non-transitory computer-readable storage medium storing computer programs/instructions for implementing the method, and a computer program product comprising computer programs/instructions for implementing the method.

In the industrial manufacturing sector, product quality inspection is a core process to ensure production reliability and reduce defective rates. Manual visual inspection remains the mainstream inspection method for small and medium-sized enterprises (SMEs), but it has shortcomings such as dependence on inspector experience for inspection accuracy and high labor costs. On the other hand, while computer vision systems enable automated inspection in standardized production lines, they typically lack versatility and scalability, making them difficult to adapt to flexible manufacturing requirements. In addition, computer vision systems typically include expensive dedicated software and hardware (e.g., inspection software packages specifically developed for specific production lines, industrial-grade linear array cameras, and high-precision positioning platforms, etc.), which limits their widespread application due to high costs.

An apparatus for inspecting product quality according to one aspect of the present disclosure comprises one or more processors, one or more memories, and computer programs/instructions stored on the memories. When the above-mentioned computer programs/instructions run on the processor, it will result in the following operations: acquiring images depicting an operating process of a product under inspection; generating non-structured descriptive information about the images; transforming the non-structured descriptive information into structured descriptive information; and, generating test results for the product under inspection based on the structured descriptive information.

In a method for inspecting product quality according to another aspect of the present disclosure comprises the following steps executed by executing computer programs/instructions on a processor: acquiring images depicting an operating process of a product under inspection; generating non-structured descriptive information about the images; transforming the non-structured descriptive information into structured descriptive information; and, generating test results for the product under inspection based on the structured descriptive information.

According to yet another aspect of the present disclosure, a computer-readable storage medium storing computer programs/instructions suitable for execution on a processor of a terminal unit is provided, where execution of the computer programs/instructions results in the steps of the above-mentioned method being executed.

According to still another aspect of the present disclosure, a computer program product comprising computer programs/instructions is provided, where execution of the computer programs/instructions results in the steps of the above-mentioned method being executed.

The above and/or other aspects and advantages of the present disclosure will become clearer and easier to understand through the description of various aspects in conjunction with the accompanying drawings, where the same or similar units are denoted by the same reference signs. The accompanying drawings comprise:
FIG. 1 is a schematic block diagram of a product quality inspection system according to an embodiment of the present disclosure.
FIG. 2 is a schematic block diagram of a computing device.
FIG. 3 is a flowchart of a method for inspecting product quality according to another embodiment of the present disclosure.
FIG. 4 is a flowchart of a method for inspecting product quality according to another embodiment of the present disclosure.
FIG. 5 is a flowchart of a method for inspecting product quality according to another embodiment of the present disclosure.
FIG. 6 is a flowchart of a method for inspecting product quality according to another embodiment of the present disclosure.

Particular embodiments further may include at least one, or a plurality of, the following optional features, alone or in combination with each other:

The present disclosure is described in a more comprehensive manner below with reference to the accompanying drawings that illustrate the exemplary embodiments of the present disclosure. However, the present disclosure can be implemented in different forms and should not be interpreted as limited to the various embodiments provided herein. The various embodiments provided above are intended to make the disclosure of the present disclosure comprehensive and complete, so as to convey the scope of protection of the present disclosure to those skilled in the art in a more comprehensive manner.

In this description, terms such as "include" and "comprise" indicate that, in addition to having units and steps that are directly and explicitly stated in the description and claims, the technical solution of the present disclosure does not exclude the possibility of having other units and steps that are not directly or explicitly stated.

In this description, "products" encompasses both finished products that have completed the entire production process and are available for direct use or consumption, and semi-finished or intermediate products that are in the intermediate links of the production chain and require further processing to form their final form. In addition, products include both hardware products in a physical form, and software products (applications) in an intangible form.

In this description, "computing devices" refer to various devices or systems that can perform data processing, logic operations, storage, and communication tasks through physical mechanisms such as electronics, optics, or quantum. They not only include standalone systems, but also include distributed computing systems based on network collaboration.

The standalone systems described herein include but are not limited to personal computing devices (e.g., desktop computers, laptops, workstations), server devices (e.g., high-performance computers that provide shared resources or services for networks), and embedded computing devices (e.g., dedicated computing modules integrated into other devices, such as industrial controllers and vehicle controllers).

The distributed computing systems described herein refer to systems that complete computing tasks through collaboration of multiple compute nodes interconnected by the network. They can be, for example, server clusters composed of multiple physical servers interconnected by high-speed networks, cloud computing platforms that integrate computing resources based on virtualization technology, edge computing devices deployed at network edge nodes (e.g., intelligent gateways, edge servers, and edge computing gateways in the Internet of Things), and virtual supercomputers or grid computing systems formed by coordinating computing resources through distributed networks.

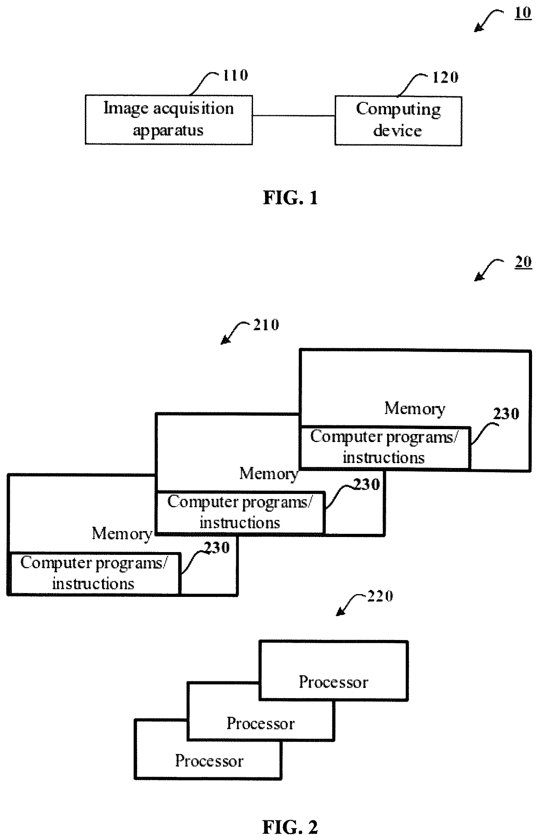

FIG. 1 is a schematic block diagram of a product quality inspection system according to an embodiment of the present disclosure. The product quality inspection system 10 illustrated comprises a terminal unit 110 and a computing device 120.

The terminal unit 110 can be deployed at an inspection point (e.g., inside an elevator car) and configured to present one image or a plurality of images in a chronological order, depicting the operating process of a product under inspection. In this embodiment, for example, the product under inspection comprises a hardware unit of an elevator system or an application running on the elevator system, and the terminal unit 110 is used to simulate the operation of the car control panel. During the testing process, the screenshots of the terminal unit 110 can present the operating process of the hardware unit of the elevator system or the operating process of the application running on the elevator system. For example, the illumination of the indicator light indicating that the elevator is running upward in the images signifies that the car is moving upward under the control of the elevator controller.

In this embodiment, to reduce hardware costs and accelerate the development process, electronic devices supporting the Android operating system (also known as Android devices) are employed as terminal units, including but not limited to smartphones, tablets, Android TVs, industrial-grade handheld terminals (e.g., customized Android tablets), and the like. These electronic devices, by virtue of running the Android system, possess programmable hardware control capabilities, such as capturing raw screen images or screenshots in real time based on Android Debug Bridge (ADB) commands. ADB, as a command-line tool enabling communication between a computing device and an Android device, is commonly used for debugging, file transfer, application installation, and device command execution, serving as a bridge connecting the development environment and the Android device.

It should be noted that the number of terminal units 110 shown in FIG. 1 is only exemplary. In some variations of this embodiment, the product quality inspection system 10 may comprise a plurality of terminal units 110, which are deployed, for example, at inspection points located in different geographical locations or factories.

A communication connection (e.g., a wireless or wired communication connection) is established between the computing device 120 and the terminal unit 110 to obtain screenshots of the terminal unit 110. In this embodiment, the computing device 120 obtains images of the operating process of the product under inspection from the terminal unit 110, and then generates quality inspection information of the product under inspection based on the images acquired. Specifically, the computing device 120 generates non-structured descriptive information of the images depicting the operating process, transforms the non-structured descriptive information into structured descriptive information, and generates quality inspection information about the product under inspection based on the structured descriptive information obtained.

The above-mentioned non-structured descriptive information refers to descriptive information with natural language semantics as the core descriptive content, such as semantic descriptive information conveyed via natural language text. In this embodiment, non-structured descriptive information for describing product features or characteristics can be generated by performing image semantic analysis on images depicting the operating process using a neural network model. Image semantic analysis focuses on the analysis of semantic information (i.e., "meaning") in an image. It first extracts semantic information (e.g., object categories, positions, actions, scene relationships, etc.) from an image, and then determines the meaning expressed by the image based on the extracted semantic information. Taking a screenshot of a terminal unit simulating the operation of a car control panel being used as the image depicting the operating process as an example, the screenshot will include various objects, such as floor selection buttons, door opening/closing buttons, emergency stop buttons, floor number indicator lights, elevator running direction indicator lights, fault warning lights, and emergency alarm buttons, and the like. In this example, non-structured descriptive information is used to describe the semantics represented by the states of these objects (e.g., pressed state, unpressed state, illuminated state, and extinguished state). For example, through image semantic analysis, the following non-structured descriptive information in text form can be obtained: "Elevator going up, currently positioned at Floor 5, designated stop floors: 8 and 9", "Elevator currently stopped at Floor 6, car door opening", and "Elevator emergency call request triggered", and the like.

Optionally, the neural network model for image semantic analysis is based on a Convolutional Neural Network (CNN)-Generative Adversarial Network (GAN) architecture. In this architecture or hybrid model, CNN is responsible for extracting hierarchical features (e.g., edges, textures, object components) from images and serving as the discriminator or encoder for GAN to extract semantic features from images. In a considerable number of industrial application scenarios, CNN models are difficult to train effectively due to the scarcity of real samples. The above architecture can generate a large amount of synthetic data as training samples for CNN by training the GAN with a small amount of real data, thus solving the problem of scarce training samples.

The above-mentioned structured descriptive information refers to descriptive information with a set format, where available set forms, for example, include but are not limited to JSON and XML. Taking the target format JSON as an example, it is necessary to first define corresponding fields (e.g., {"Entity Type": "value", "Attribute": "value", "Relationship": "value"}), and then extract semantic elements such as entities, attributes, and relationships corresponding to the target format from the non-structured descriptive information in text form, and map and populate the extracted information according to the fields of the target format. Algorithms for implementing structured mapping, for example, include but are not limited to template matching algorithms and machine learning models. Taking the unstructured descriptive information "On August 8, 2018, in production workshop A, a surface scratch defect was detected on the bearing of equipment ID M2008, located on the outer ring, with a severity level of 3" as an example, in JSON format, the structured descriptive information can be represented as:

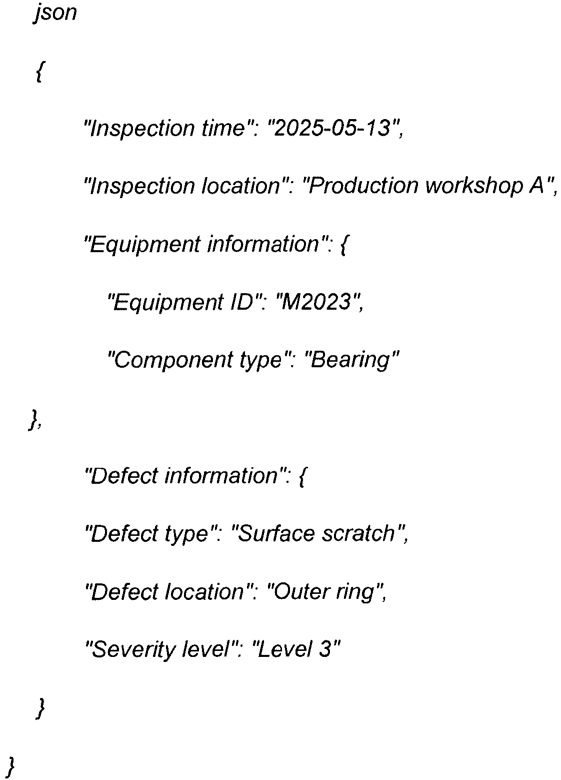

In this embodiment, the machine learning model for implementing structured mapping can be a model based on traditional machine learning classification algorithm (e.g., Logistic Regression (LR), Support Vector Machine (SVM), Decision Tree (DT), Random Forest (RF), Naive Bayes (NB), etc.), or can be a deep learning classification model (e.g., Convolutional Neural Network (CNN), Recurrent Neural Network (RNN), Transformer, Multilayer Perceptron (MLP), etc.).

In this embodiment, structured descriptive information contains a plurality of data elements. The data elements recited herein generally refer to various atomic-level data units in structured descriptive information, such as fields, attributes, and key values. In examples where hardware units of elevator systems or applications running in elevator systems serve as the products under inspection, structured descriptive information may include data elements describing one or more of the following: the direction of movement of the car (e.g., determined from the display state of the elevator running direction indicator light), the floors passed during the movement (e.g., determined from the display state of the floor number indicator light), the floor stopped (e.g., determined from the change in display state of the floor selection button), and the state of the car door (e.g., determined from the state of the door opening/closing button).

In practical applications, there is a correlation between the data elements in the structured descriptive information of the product under inspection and the features of the product, and anomalies in product features often indicate potential quality defects in the product.

Still taking hardware units of elevator systems or applications running in elevator systems as an example, assuming that the floor indicated by the floor number indicator light serves as one of the data elements of the structured descriptive information, for multiple images acquired at set intervals on the terminal unit screen, the structured descriptive information of each image is obtained through the above processing. The structured descriptive information includes the data elements describing the floors indicated by the floor number indicator light at various time points, and thus the "apparent" movement speed of the car (i.e., the car movement speed obtained based on the floor number displayed on the car control panel) can be determined. The "apparent" movement speed here can be seen as a product feature of the relevant hardware unit or application. On the other hand, under normal circumstances, the movement speed of the elevator car will not exceed a speed limit value. Therefore, potential quality defects can be determined by comparing the "apparent" movement speed with the speed limit value.

For another example, under normal operating logic, the car door can only be opened when the car is stopped at a landing. For multiple images of the terminal unit acquired at set intervals, if the data element describing the state of the door opening button in the structured descriptive information always indicates that the car door is in an open state, while the data element describing the floor number indicates that the floor is in a changing state (i.e., the car is in motion), it obviously does not conform to the operating logic of the elevator system, and therefore it can be judged that there is a potential quality defect in the relevant hardware unit or application.

For yet another example, in the acquired screen images on the terminal unit, the data element describing the state of the door opening button in the structured descriptive information always indicates that the car door is in the open state, while the data element describing the state of the door closing button always indicates that the car door is in the closed state. Due to the inconsistency with the operating logic of the elevator system, it can be judged that there is a potential quality defect in the relevant hardware unit or application.

In this embodiment, in addition to using the time-varying characteristics of data elements or the self-consistency between data elements and the operating logic of the elevator system or product as a criterion for quality inspection, the computing device 120 can also generate quality inspection information about the product under inspection based on the self-consistency between data elements in structured information and elevator system control commands. For example, in an image depicting the operating process of a product under inspection, the data element describing the state of the elevator running direction indicator light in the structured descriptive information indicates that the car is moving upward, while the elevator controller generates the control commands to move the car downward. This non-consistency can be used to determine a potential quality defect in the relevant hardware unit or application.

In this embodiment, in the case where the product under inspection is an application, the operations of testing results may also include determining whether the application has passed the logic correctness testing and logic completeness test based on structured information.

In this embodiment, the computing device 120 can also use ADB commands to acquire images from terminal units. For example, the computing device 120 first establishes an ADB connection with the terminal unit 110 using the ADB connection command, and after successful connection, uses the screenshot command to acquire a screenshot of the terminal unit 110.

FIG. 2 is a schematic block diagram of a computing device. The device shown in FIG. 2 can, for example, be used to implement the computing device in FIG. 1.

As shown in FIG. 2, the computing device 20 comprises one or more memories 210 (e.g., non-volatile memories such as flash memories, ROMs, hard disk drives, magnetic disks, optical disks, etc.), one or more processors 220, and computer programs/instructions 230.

The memory 210 stores computer programs/instructions 230 executable by the processor 220. In addition, the memory 210 can also store configuration data (e.g., parameters of neural network models used for image semantic analysis, parameters of machine learning models, and quality inspection scripts, etc.) and data generated by the processor 220 when executing computer programs/instructions 230.

The processor 220 is configured to run computer programs/instructions 230 stored on the memory 210 and perform access operations on the memory 210.

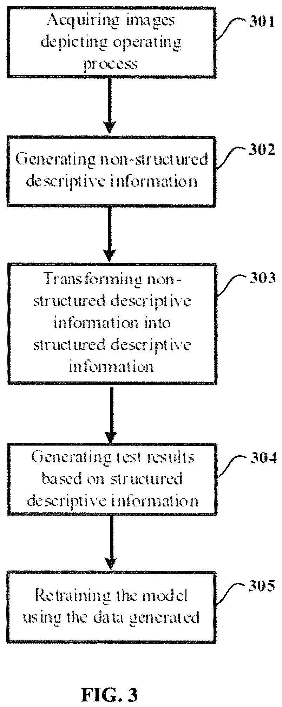

The program codes for various functions and operations of the computing device 120 in FIG. 1, or the various functions and operations described below with reference to FIGS. 3-6 can be implemented by running computer programs/instructions 230 on the processor 220.

It should be noted that the computing device 20 shown in FIG. 2 can either be an independently-operating standalone system or a distributed computing system based on network collaboration. When the computing device 20 is implemented as a standalone system, its core components (e.g., processors, memories, and computer programs/instructions) are integrated into a single physical device to independently complete the entire quality inspection process. When the computing device 20 is implemented in the form of a distributed computing system based on network collaboration, the quality inspection process will be collaboratively completed by core components located on multiple physically isolated compute nodes.

FIG. 3 is a flowchart of a method for inspecting product quality according to another embodiment of the present disclosure. The method described below in conjunction with FIG. 3 can be implemented by various computing devices, such as computing devices 120 and 20. Specifically, the various steps of the described method are executed by executing computer programs/instructions stored in the memory on the processor of the computing device.

The method shown in FIG. 3 begins at step 301. In this step, the computing device acquires images depicting the operating process of a product under inspection. In this embodiment, the image acquisition step may comprise acquiring images depicting the operating process of the product under inspection from a terminal unit (e.g., an electronic device supporting the Android operating system deployed at the inspection point), where the image(s) can be an image acquired at a certain time point or a plurality of images acquired at set intervals.

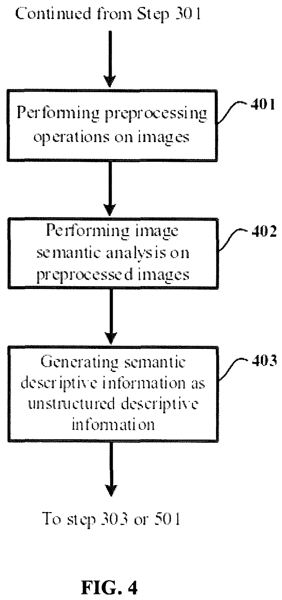

After step 301, the process shown in FIG. 3 proceeds to step 302. In this step, the computing device generates non-structured descriptive information from the images acquired in step 301. The specific way of generating non-structured descriptive information has been described above, and will be further described below in conjunction with FIG. 4.

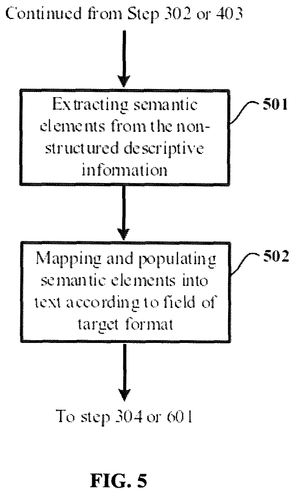

The process then proceeds to step 303. In this step, the computing device transforms the non-structured descriptive information generated in step 302 into structured descriptive information. The specific way of generating non-structured descriptive information has been described above, and will be further described below in conjunction with FIG. 5.

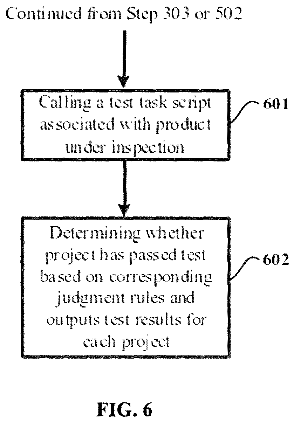

The process further proceeds to step 304. In this step, the computing device will generate test results for the product under inspection based on the structured descriptive information obtained in step 303. The specific method for generating test results has been described above, and will be further described below in conjunction with FIG. 6.

Optionally, the process shown in FIG. 3 further comprises step 305. In this step, the computing device utilizes the data generated in the above steps to retrain the model used for generating data to enhance the accuracy of judgment. For example, the computing device can utilize manually validated test results to train neural network models for image semantic analysis, or can utilize structured descriptive information to train machine learning models.

It should be noted that step 305 can be executed independently of steps 301-304 mentioned above, so the execution sequence of step 305 shown in FIG. 3 is only exemplary.

The methods described in FIGS. 4-6 below will help to further understand the specific implementation mode of the steps in FIG. 3. Similarly, to be specific, the various steps of these methods can be executed by executing computer programs/instructions stored in memory on the processors of computing devices (e.g., computing devices 120 and 20).

FIG. 4 is a flowchart of a method for inspecting product quality according to another embodiment of the present disclosure, where the illustrated method can be used to implement step 302 in FIG. 3.

Step 401 shown in FIG. 4 continues from step 301 in FIG. 3. In step 401, the computing device performs preprocessing operations on the images depicting the operating process of the product under inspection. The preprocessing operations referred to here, include, for example, photometric normalization, which is in essence the "simulation" of a uniform lighting environment through algorithms, so that images displayed on different terminal units have uniform photometric characteristics, thereby enhancing the accuracy and robustness of subsequent algorithms (e.g., image recognition/detection/segmentation). Preprocessing operations may also comprise noise filtering (e.g., median filtering, bilateral filtering, non-local means denoising) and geometric correction.

The process then proceeds to step 402. In this step, the computing device utilizes neural network models (e.g., the above-mentioned CNN-GAN hybrid model) to perform image semantic analysis on the preprocessed images, thereby obtaining semantics of the objects (e.g., the buttons and indicator lights of the car control panel) contained in the images. For example, illumination of the upward-running indicator light among the elevator running direction indicator lights can be interpreted or understood as the elevator is going up, illumination of the selection button of a particular floor can be interpreted as the corresponding floor being the target floor to be stopped, and illumination of the door opening button can be interpreted as the car door being in an open state, and the like.

Continuing to step 403 , in this step, the computing device generates semantic descriptive information depicting the states of the objects contained in the images as unstructured descriptive information, where such semantic descriptive information is conveyed via natural language text or in the form of natural language. Taking the car control panel as an example, the semantic descriptive information can be the following text example: "Elevator currently positioned at Floor 1, no target floors to stop on". After executing step 403, the process shown in FIG. 4 can proceed to step 303 in FIG. 3 or step 501 in FIG. 5.

It should be noted that step 401 in the process shown in FIG. 4 is optional. When the acquired images can meet the processing requirements of subsequent algorithms, this preprocessing step can be omitted.

FIG. 5 is a flowchart of a method for inspecting product quality according to another embodiment of the present disclosure, where the illustrated method can be used to implement step 303 in FIG. 3.

Step 501 shown in FIG. 5 continues from step 302 in FIG. 3 or step 403 in FIG. 4. In step 501, the computing device extracts semantic elements corresponding to the target format (e.g., semantic elements such as entities and attributes corresponding to the target format) from the non-structured descriptive information generated in step 302 or step 403. For example, the computing device first identifies named entities (e.g., "target floors to stop on", "car door", and "current stop"), and then extracts feature values or attribute values of the entities (e.g., "open" being the attribute value of "car door", "Floor 1", "floor to be docked at", or "the currently docked floor" being attribute values).

After step 501, the process shown in FIG. 5 proceeds to step 502. In this step, the computing device maps and populates the semantic elements extracted in step 501 into text with the target format according to the field of the target format to generate structured descriptive information. As mentioned above, algorithms for implementing field mapping population include but are not limited to template-matching algorithms or machine learning models. After executing step 502, the process shown in FIG. 5 can proceed to step 304 in FIG. 3 or step 601 in FIG. 6.

FIG. 6 is a flowchart of a method for inspecting product quality according to another embodiment of the present disclosure, where the illustrated method can be used to implement step 304 in FIG. 3.

Step 601 shown in FIG. 6 continues from step 303 in FIG. 3 or step 502 in FIG. 5. In step 601, the computing device calls a test task script associated with the product under inspection, which includes one or more test project numbers and corresponding judgment rules for the test projects. For example, in the test project involving the "apparent" movement speed of the car as mentioned above, the judgment rule can be set as "passing the test when it is less than or equal to the speed limit value". For another example, in the test project involving the indication of the car door state, the judgment rule can be set as "failure to pass the test when it is indicated that the car door is in both open and closed states at the same time".

The process then proceeds to step 602. In this step, the computing device determines, for each project in the test task script, whether the project has passed the test based on the corresponding judgment rules and outputs the test results for each project.

It should be noted that the program codes for implementing the method according to the present disclosure can be written in any combination of one or more programming languages. Such program codes can be provided to processors or controllers of general-purpose computers, special-purpose computers, or other programmable data processing apparatuses, so that when executed by the processors or controllers, the program codes cause the functions/operations specified in the flowcharts and/or block diagrams to be implemented. The program codes may be executed entirely on a machine, executed partly on a machine, executed partly on a machine and partly on a remote machine as a standalone software package, or executed entirely on a remote machine or server.

It should also be noted that, in order to demonstrate the interchangeability between hardware and software, various schematic components, blocks, modules, circuits, and steps are described above as a whole based on their functionality. The implementation of such functionality in the form of hardware or software depends on the specific application and the design constraints imposed on the overall system. Those skilled in the art may implement the described functionality according to specific applications and in varying ways, but such implementation decisions should not be understood as causing a deviation from the scope of the present disclosure.

Although only some specific embodiments of the present disclosure have been described, those skilled in the art should understand that the present disclosure may be implemented in many other forms without departing from the spirit and scope thereof. Therefore, the examples and embodiments illustrated are therefore considered illustrative rather than restrictive. The present disclosure may encompass various modifications and substitutions without departing from the spirit and scope of the present disclosure as defined by the appended claims.

## Claims

1. An apparatus for inspecting product quality, comprising:
one or more processors;
one or more memories; and
computer programs/instructions stored on the memories, which, when executed on the processors, resulting in following operations:
acquiring images depicting an operating process of a product under inspection;
generating non-structured descriptive information about the images;
transforming the non-structured descriptive information into structured descriptive information; and
generating test results about the product under inspection based on the structured descriptive information.

2. The apparatus according to claim 1, wherein the product under inspection comprises a hardware unit of an elevator system or an application running on the elevator system, and acquiring the images comprises acquiring screenshots of a terminal unit simulating operation of a car control panel.

3. The apparatus according to claim 2, wherein ADB commands are used to acquire the screenshots; and/or
wherein generating the non-structured descriptive information comprises:
performing, using a neural network model, image semantic analysis on the images to obtain semantics of states of objects contained in the images; and
generating semantic descriptive information about the states of the objects contained, conveyed via natural language text, as the unstructured descriptive information.

4. The apparatus according to claim 3, wherein the objects comprise buttons and indicator lights of the car control panel; and/or
wherein generating the non-structured descriptive information further comprises: performing preprocessing operations on the images before performing semantic analysis of the images, the preprocessing operations comprising one or more of following operations on the images: photometric normalization, noise filtering, and geometric correction; and/or
wherein the neural network model is based on a Convolutional Neural Network (CNN)-Generative Adversarial Network (GAN) architecture.

5. The apparatus according to any of claims 1 to 4, wherein transforming the non-structured descriptive information into structured descriptive information comprises:
extracting semantic elements corresponding to a target format from the non-structured descriptive information; and
generating text with the target format from the semantic elements as the structured descriptive information using template matching algorithms or machine learning models.

6. The apparatus according to any of claims 1 to 5, wherein the structured descriptive information comprises a plurality of data elements that describe one or more of the following: direction of movement of a car, floor(s) passed during movement, floor(s) stopped, and states of car door(s).

7. The apparatus according to any of claims 1 to 6, wherein generating the test results for the product under inspection comprises:
determining whether the product under inspection passes quality test based on one or more of the following: i) time-varying characteristics of the data elements; ii) self-consistency between the data elements and operational logic of the product under inspection; and iii) self-consistency between the data elements and elevator system control commands.
wherein generating the test results for the product under inspection comprises determining whether the application passes logic correctness testing and logic completeness testing based on the structured information.

8. A method for inspecting product quality, comprising following steps executed by executing computer programs/instructions on a processor:
acquiring images depicting an operational process of a product under inspection;
generating non-structured descriptive information about the images;
transforming the non-structured descriptive information into structured descriptive information; and
generating test results for the product under inspection based on the structured descriptive information.

9. The method according to claim 8, wherein the product under inspection comprises a hardware unit of an elevator system or an application running on the elevator system, and a step of acquiring the images comprises acquiring screenshots of a terminal unit simulating operation of a car control panel; and/or
wherein ADB commands are used to acquire the screenshots; and/or
wherein a step of generating the non-structured descriptive information comprises:
performing, using a neural network model, image semantic analysis on the images to obtain semantics of states of objects contained in the images; and
generating semantic descriptive information about the states of the objects contained, conveyed via natural language text, as the unstructured descriptive information.

10. The method according to claim 9, wherein the objects comprise buttons and indicator lights of the car control panel; and/or
wherein the step of generating the non-structured descriptive information further comprises: performing preprocessing operations on the images before performing semantic analysis of the images, the preprocessing operations comprising one or more of following operations on the images: photometric normalization, noise filtering, and geometric correction; and/or
wherein the neural network model is based on a Convolutional Neural Network (CNN)-Generative Adversarial Network (GAN) architecture.

11. The method according to claim 9 or 10, wherein a step of transforming the non-structured descriptive information into structured descriptive information comprises:
extracting semantic elements corresponding to a target format from the non-structured descriptive information; and
generating text with the target format from the semantic elements as the structured descriptive information using template matching algorithms or machine learning models; and/or
wherein the structured descriptive information comprises a plurality of data elements that describe one or more of the following: direction of movement of a car, floor(s) passed during movement, floor(s) stopped, and states of car door(s).

12. The method according to any of claims 9 to 11, wherein a step of generating test results for the product under inspection comprises:
determining whether the product under inspection passes quality test based on one or more of the following: i) time-varying characteristics of the data elements; ii) self-consistency between the data elements and operational logic of the product under inspection; and iii) self-consistency between the data elements and elevator system control commands; and/or
wherein the step of generating test results for the product under inspection comprises determining whether the application passes logic correctness testing and logic completeness testing based on the structured information.

13. A product quality inspection system, comprising:
a terminal unit simulating operation of a car control panel; and
a computing device according to any of claims 1 to 9 in communication connection with the terminal unit:
wherein acquiring images comprises depicting an operating process of a product under inspection presented on the terminal unit, wherein the product under inspection comprises a hardware unit of an elevator system or an application running on the elevator system.

14. A non-transitory computer-readable storage medium storing computer programs/instructions, wherein steps of a control method according to any of claims 8 to 12 are implemented by executing the computer programs/instructions by a processor.

15. A computer program product comprising computer programs/instructions, wherein the steps of the control method according to any of claims 8 to 12 are implemented by executing the computer programs/instructions by a processor.
